# EUROPÄISCHE PATENTSCHRIFT

(11) **EP 1 296 790 B1**
(45) Veröffentlichungstag und Bekanntmachung des Hinweises auf die Patenterteilung: **25.02.2004**
(21) Anmeldenummer: 01971741.2
(22) Anmeldetag: 29.06.2001
(51) Int. Cl.: B23B 29/06

(54) **MEHRSCHICHTIGE VERPACKUNG FÜR FETTENDE GÜTER**
MULTILAYERED PACKAGING FOR GREASY PRODUCTS
EMBALLAGE A PLUSIEURS COUCHES POUR DENREES ALIMENTAIRES GRASSES

(30) Priorität: 03.07.2000 DE 10032252; 06.10.2000 DE 10049665
(43) Veröffentlichungstag der Anmeldung: 02.04.2003
(73) Patentinhaber: Fraunhofer-Gesellschaft zur Förderung der angewandten Forschung e.V., 80686 München (DE); Pawlak, Peter, 06766 Wolfen (DE)
(72) Erfinder: PAWLAK, P., c/o G. Spezialfolien-Entwicklung mbH, 06766 Wolfen (DE); KIPPENHAHN, Rolf, 6274 Eschenbach (CH); LUCK, Thomas, 80992 München (DE); SCHÖNWEITZ, Claudia, 85356 Freising (DE)
(86) Internationale Anmeldenummer: PCT/EP2001/007456
(87) Internationale Veröffentlichungsnummer: WO 2002/002412

(56) Entgegenhaltungen:
- EP-A- 0 690 012
- WO-A-99/58331
- DE-A- 4 137 802
- DE-A- 4 223 471
- DATABASE WPI Section Ch, Week 198329 Derwent Publications Ltd., London, GB; Class A18, AN 1983-714177 XP002186053 & JP 58 098251 A (SUMITOMO BAKELITE CO), 11. Juni 1983 (1983-06-11)

## Beschreibung

Gegenstand der Erfindung sind mehrschichtige, fettdichte Verpackungsmaterialien mit einer Trägerschicht, die aus Papier/Karton oder anderen geeigneten, auf Polymeren basierenden Stoffen besteht.

Es ist seit langem bekannt, Papier- und Kartonbehälter mit Beschichtungen zu versehen, die eine Sperrwirkung für Aromen oder Feuchtigkeit/Flüssigkeiten besitzen. So beschreibt die DE 41 09 983 A1 ein flexibles Verpackungsbehältnis mit einem Verbund aus einer Papierschicht und einer thermoplastischen Schicht oder Folie. Das thermoplastische Schicht- oder Folienmaterial besteht aus Stärke, einem synthetischen, nichtpolyolefinischen, hydroxylgruppenhaltigen Polymeren, z.B. einem oxygenierten Polymeren, sowie Weichmachern natürlichen Ursprungs, z.B. stärkeabgeleiteten Polyalkoholen. Dieses Material kann durch Wärmezufuhr aufgeschmolzen werden und ist daher extrudierbar. In der DE 41 37 802 A1 wird vorgeschlagen, einen Karton mit einer beschichteten Papierbahn zu kaschieren, um ein verrottbares, flüssigkeitsabweisendes Produkt zu erhalten. Die Beschichtung der Papierbahn soll auf Stärkebasis, z.B. von Kartoffelstärke, erfolgen. Die DE 42 94 110 offenbart eine Beschichtungsdispersion, die aus Copolymerisaten von oxidierter Stärke und Styrol, Butadien, Acrylsäure oder ähnlichen polymerisierbaren Molekülen erzeugt wird. Diese Dispersion vermindert die Gas- und Wasserdurchlässigkeit von Karton oder Papier.

Allerdings ist es häufig notwendig, Verpackungsmaterialien mit hoher Fettdichtigkeit bereitzustellen. So fordern Tiernahrung, Backwaren, Konfekt und Schokolade von der Verpackung eine besonders hohe Fettdichtigkeit, die beispielsweise durch die sog. KIT-Zahlen mit Werten zwischen 8 und 12 angegeben werden. Hohe KIT-Zahlen stehen dabei für hohe Fettdichtigkeiten, bereits ab Werten von 6 liegt eine gute Fettdichtigkeit vor.

Entsprechende im Handel angebotene Papier-/Kartonverpackungen sind üblicherweise einer fettabweisenden Oberflächen- und/oder Massebehandlung unterzogen worden. Für diese Massebehandlung bzw. Oberflächenbehandlung werden derzeit vor allem Fluorpolymere eingesetzt, wobei etwa bis zu 5 Gew.-% Beschichtungsmaterial auf das Material gelangen. Bereits Fettdichten > 6 bis 8 können nur durch Kombinationen von Schicht- und Massebehandlung erreicht werden, Fettdichten mit KIT-Zahlen > 12 können mit den gegenwärtigen Systemen nicht garantiert werden. Beispielsweise erfordert das Verpacken von trockenem Tierfutter mit niedrigem Fettgehalt (<10 %) eine Behandlung der Rückseite in der Masse, bei höheren Fettgehalten wird eine Barriere durch Massebehandlung in Kombination mit einer Oberflächenbeschichtung durchgeführt.

Papier-, Papp- und Kartonverpackungen werden ordnungsgemäß über den Altpapierkreislauf entsorgt. Die als Fettbarriere eingesetzten Halogenpolymere gelangen somit über die Papieraufbereitung entweder in die Papierneuware oder in das Prozeßabwasser.

Stärkeether sind als Hilfsstoffe und Einsatzstoffe in der Papierindustrie bekannt. Dabei genutzte Eigenschaften sind in der einschlägigen Literatur ausführlich beschrieben. Sie werden eingesetzt in der Oberflächenbeschichtung bzw. dem Strich sowie in pigmentierten Papierbeschichtungen. Auch für den Lebensmittelkontakt zugelassene Papiere, Kartons und Pappen dürfen nach dem BGVV Stärkeether (z.B. Hydroxyethyl- und Hydroxypropylether) enthalten. Stärkeether werden wegen ihrer guten Filmbildungseigenschaft und ihrem Wasserbindevermögen außerdem als Bestandteil von Klebstoffen verwendet. Literatur hierzu findet sich beispielsweise in Ullmanns Enzyklopädie der technischen Chemie; W. Baumann/B. Herberg: Papierchemikalien - Fakten zum Umweltschutz (Springer-Verlag); O.B: Würzburg: Modified Starches: Properties and Uses (CRC Press).

Weiterhin ist bekannt, daß Stärkeether-Derivate zu Folien/Filmen verarbeitet werden können, vornehmlich in Gießtechnik aus einer wäßrigen Lösung.

Wenn die Herstellung der Stärkeether nach dem sog.
Slurry-Verfahren erfolgt, wird die wäßrige Stärkesuspension im Alkalischen bei Temperaturen bis zu 50 °C derivatisiert. Die DS-Grade liegen dabei meist um 0,2. Charakteristisch für diese Verfahren ist die bevorzugte Derivatisierung am C₂-Atom. Ein anderes, vornehmlich aus wissenschaftlichen Untersuchungen bekanntes Verfahren (Autoklav-Verfahren) geht von alkalisch aktivierter Stärke aus und kommt bei geringeren TS-Konzentrationen zu homogeneren Derivatisierungen, wobei der DS-Grad allerdings ähnlich eingestellt wird. Ein Vorgehen nach dieser Strategie ist in der DE 42 23 471 A1 beschrieben, wobei die so erhaltenen Stärkeether zur Folienherstellung eingesetzt werden sollen, und zwar insbesondere für die Anwendung als Overhead-, Kopier- und Druckerfolien oder für die Oberflächenveredlung von Spezialpapieren sowie als Verpackungsmaterial. Darüber hinaus wird in dieser Druckschrift erwähnt, daß die genannten Etherderivat-Folien auch im Verbund mit anderen Materialien verwendet werden können.

Aufgabe der vorliegenden Erfindung ist die Bereitstellung von lebensmittelrechtlich zulässigen, fettdichten Verpackungsmaterialien.

Überraschenderweise hat sich herausgestellt, daß Substrate, die selbst keine ausreichende Fettbeständigkeit aufweisen, wie Papier, Karton, Pappe oder andere aus oder mit Cellulose hergestellte Materialien, dann fettdicht sind, wenn sie mit alkylenoxidderivatisierter Stärke beschichtet sind.

Die vorliegende Erfindung stellt daher mehrschichtige Verpackungen für fettende Güter oder Teile solcher Verpackungen bereit, die eine Trägerschicht aus einem polymeren Material als Hauptkomponente sowie mindestens eine auf die Trägerschicht aufgebrachte, nicht die Außenseite der Verpackung bildende Schicht aufweisen, wobei die auf die Trägerschicht aufgebrachte Schicht eine alkylenoxidderivatisierte Stärke als Hauptkomponente enthält. Das hierfür verwendete Alkylenoxid kann in gut geeigneter Weise ein C₂-C₆-Alkylenoxid sein. C₂-C₄-Alkylenoxide sind bevorzugt.

Die Beschichtung eines Trägermaterials mit der Funktionsschicht "Stärkederivat" realisiert ein fettdichtes Verbundsystem. Die Stärkekomponente ist dabei verantwortlich für die Fettdichtigkeit und weist zudem die Eigenschaft der biologischen Abbaubarkeit auf. Außerdem läßt sich eine solche Stärke gut in Beschichtungsmassen für den angegebenen Zweck einarbeiten, da sie - im Gegensatz zu nativer Stärke - nicht zum Re-Agreggieren (Retrogradation) neigt.

Die Verpackungen der vorliegenden Erfindung sind nicht auf spezifische Ausgestaltungen beschränkt. Ein beispielhafter, bevorzugter Anwendungsbereich sind Verpackungen von Lebens- und Tierfuttermitteln mit geringen Wassergehalten und gleichzeitig hohen Fettgehalten, insbesondere Faltschachteln. Beispiele hierfür sind Verpackungen für Kekse, Schokoladen, sonstige Süßwaren, trockenes Tierfutter, bei denen eine besonders gute Barriere gegen den Durchtritt von Wasserdampf nicht erforderlich ist. Aber auch Verpackungen für fetthaltige Nicht-Lebensmittel (z.B. Kosmetika, ölhaltige Farbpigmente oder dgl.) können erfindungsgemäß gestaltet werden.

Weitere Anwendungsmöglichkeiten liegen in der Beschichtung von anderen Polymeren als Cellulose mit dem erfindungsgemäß vorgeschlagenen Material (z.B. andere Verpackungskunststoffe) für ähnliche Verpackungsaufgaben. Auch die Beschichtung von Papier im Sinne eines Einschlagpapieres ist eine mögliche Anwendung.

Mit den Verpackungsmaterialien der vorliegenden Erfindung lassen sich hohe Fettdichtigkeiten erzielen, die im Bereich ab einer KIT-Zahl von 6, vorzugsweise von mindestens 8, in der Regel aber wesentlich höher liegen. So können Dichtigkeiten einer KIT-Zahl von 10 oder 12, in extremen Fällen sogar von bis über 21 erreicht werden, die mit den bisherigen, nicht biokompatiblen bzw. -abbaubaren Systemen nicht garantiert werden können.

Weitere Vorteile der erfindungsgemäßen Verpackungen sind, daß ihre Herstellung mit üblichen Verfahren der Papier- bzw. Kartonherstellung kompatibel ist und daß sie biologisch abbaubar sind, wobei sie hinsichtlich der ökonomischen und/oder ökologischen Bewertungen im Vergleich zu üblichen Systemen als besonders vorteilhaft einzustufen sind, insbesondere wenn die Faktoren Preis der Beschichtung einschl. Verfahrenskosten und die Verträglichkeit mit dem Papierrecyclingprozeß berücksichtigt werden sollen.

Aufgrund ihrer Bioabbaubarkeit gewährleisten die erfindungsgemäß beschichteten Verpackungen eine gute Verträglichkeit mit den Aufbereitungs- und Abwasserreinigungsmöglichkeiten von Altpapierentsorgungsanlagen. Hier stellt das Abbauverhalten im Papierkreislauf im Sinne der Vermeidung eines weiteren Störstoffeintrags einen entscheidenden Vorteil dar.

Geeignete Materialien für die Trägerschicht sind insbesondere Papier, Pappe oder Karton, ggf. in Mischung mit anderen geeigneten oder in der Verpackungstechnologie von Lebensmitteln üblichen oder zulässigen Stoffen wie Bindemitteln oder Farbstoffen. Aber auch andere, bevorzugt auf natürlichen Polymeren wie Cellulose oder dgl. basierende Materialien oder Kunststoffe können eingesetzt werden.

Erfindungsgemäß geeignete Stärkederivate sind solche, die mit einem Alkylenoxid wie Ethylenoxid oder Propylenoxid oder einem längerkettigen Alkylenoxid derivatisiert wurden. Die angelagerten Gruppen vergrößern die Abstände zwischen den Molekülketten und steigern damit deren Beweglichkeit. Der damit gegebene innere Weichmachungseffekt kann nur durch eine Zerstörung der chemischen Bindung rückgängig gemacht werden.

Das Stärkederivat sollte auf der Trägerschicht vorzugsweise einen geschlossenen Film bilden. Sofern dies der Fall ist, können bereits sehr dünne Schichten ab etwa 6 g/m² Flächengewicht fettdicht sein, sofern das Trägermaterial eine relativ hohe Glätte aufweist.

Die Beschichtung kann als Oberflächenschicht der Innenseite der Verpackung und/oder als Zwischenschicht, ggf. auch mit der Funktion einer verklebenden Schicht zwischen Papier oder Kartonagelagen oder dgl., vorgesehen sein. Auch mehrere direkt aufeinander aufgebrachte Beschichtungen können vorteilhaft sein. Ebenso kann vor der Beschichtung mit dem Stärkederivat ein sog. Vorstrich (z.B. mit üblichen Papierbeschichtungsmitteln wie Kaolin oder Stärke) zur Anwendung kommen, der den Zweck einer Vorglättung der Oberfläche hat. Flächengewichte zum Erzielen einer fehlstellenfreien Schicht können so ggf. reduziert werden.

Die das Stärkederivat enthaltende Schicht kann ggf. durch Aufbringen einer selbsttragenden Schicht aus diesem Material auf die Trägerschicht gelangen. Vorzugsweise wird jedoch eine Lösung oder Suspension des Stärkederivats mit einer geeigneten Menge an Trockensubstanz erzeugt und auf dem Trägermaterial aufgetragen, vorzugsweise aus wässriger Lösung oder Suspension. Eine gut geeignete Menge an Trockensubstanz (TS) des Stärkederivates liegt im Bereich von etwa 5 bis etwa 50 Gew.-%, bevorzugt im Bereich von etwa 10 bis etwa 40 Gew.-%, wobei die tatsächlich zu wählende Menge vom vorgesehenen Auftragsverfahren abhängt. So kann in manchen Fällen eine Menge von bis hinunter zu 4 Gew.-% ausreichend sein.

Das Auftragen kann beispielsweise mit einem Rakel, Sprühen oder per Walzenauftrag erfolgen, ebenso durch "Druckgießen" einer konzentrierteren Lösung sowie durch das flächige Aufbringen einer thermoplastifizierten Schmelze ("Extrusion"). In allen Fällen sollte der Wassergehalt der Stärkederivates nach dem Aufbringen auf dem Trägermaterial vorzugsweise auf <25 Gew.-% reduziert werden (z.B. durch Trocknen mit IR oder konvektiv).

Neben dem Stärkederivat kann die auf der Trägerschicht aufzubringende Schicht auch weitere Additive enthalten. Zum einen bietet sich die Zugabe von Pigmenten (wie generell in der Papierindustrie üblich) an, andererseits die Zugabe von Glycerin, Harnstoff, Borax, Glyoxal oder anderen Zusatzstoffen mit ähnlichen Eigenschaften und Effekten, um gewünschte Werte bezüglich der Elastizität und der Wasser- und Langzeitstabilität zu erzielen. Auch der KIT-Wert läßt sich in manchen Fällen durch Zusatz solcher Stoffe positiv beeinflussen, z.B. durch Zusatz von Glycerin oder Vernetzer (z.B. Glyoxal). Der Anteil an Stärkederivat sollte vorzugsweise aber immer so hoch sein, daß die Ausbildung eines fehlstellenfreien Films gewährleistet ist.

Als Ausgangsmaterialien werden vorzugsweise native Stärken wie solche aus Mais, Weizen, Erbsen, Kartoffeln oder Tapioca eingesetzt.

Die Modifizierung erfolgt beispielsweise mit einem C₂- oder C₃-Akylenoxid. Propylenoxid ist bevorzugt.

Da die Stärke in geeigneter Weise in Gegenwart von Base modifiziert wird, die für die Beschichtung vorgesehene Masse jedoch günstigerweise in etwa neutral reagieren sollte, so daß im Normalfall eine Neutralisierung mit Säure erfolgen muß, ist die modifizierte Stärke in der Regel stark mit Salzen behaftet. Es ist von Vorteil, wenn dieser Salzgehalt nicht zu hoch ist, insbesondere bei Verwendung der besonders bevorzugten Weizenoder Maisstärke. So empfiehlt es sich, daß die Beschichtungsmasse in der für den Auftrag vorgesehenen Konzentration eine Leitfähigkeit von nicht mehr als 4.000 - 5.000 µS/cm, vorzugsweise von < 2.000 µS/cm besitzt.

Die Zugabe von Säuren und Laugen sollte unter dem Gesichtspunkt erfolgen, daß das entstehende Salz lebensmittelrechtlich unbedenklich ist. Geeignete Säuren sind Phosphorsäuren, eine geeignete Base ist Natronlauge. Die Entsalzung kann beispielsweise durch Dialyse erfolgen.

Beschichtungen mit höher derivatisierter Stärke zeigen günstigere Kitzahlen als solche mit geringeren Derivatisierungsgraden. Entsprechende positive Effekten hängen aber auch von der Provenienz der eingesetzten Stärke ab. Erfindungsgemäß liegt des Derivatisierungsgrad im Bereich zwischen 0,1 bis 1,0, bevorzugt zwischen 0,1 und 0,3.

Die Herstellung einer als Beschichtungsmasse oder Gießlösung o.ä.für die vorliegende Erfindung geeigneten Stärkeetherlösung kann beispielsweise wie folgt erfolgen: Die Stärke (z.B. Weizen-, Mais-, Tapioka, Kartoffel- oder HA-Erbsenstärke, z.B. aus Markerbsen) wird in annähernd dem Doppelten ihres Gewichts an Wasser einige Stunden gerührt und anschließend grob vom Wasser befreit, z.B. durch Abnutschen. Sie nimmt dabei etwa ihr eigenes Gewicht an Wasser auf, so daß sie ungefähr 40 bis 60% Trockenmasse besitzt. Anschließend wird sie in etwa dem 1,5fachen ihres Feuchtgewichts resuspendiert und durch Zugabe der gleichen Menge etwa 10%iger Base oder Lauge desintegriert. Sofort darauf werden innerhalb weniger Minuten bis ca. 1 Stunde etwa 25 - 75 Gew.-% Alkylenoxid, vorzugsweise Propylenoxid, bezogen auf das Ausgangsgewicht der trockenen Stärke, zugeführt, wobei milde Temperaturen eingehalten werden sollten. Raumtemperatur ist gut geeignet. Man läßt die Mischung mehrere Stunden rühren und anschließend etwa 20 Stunden ruhen; anschließend wird sie mit Säure neutralisiert. Soll eine Entsalzung erfolgen, geschieht dies z.B. durch Dialyse gegen Wasser. Die entsalzte Lösung wird ggf. schonend aufkonzentriert.

Der Derivatisierungsgrad der Stärken liegt bei Anwendung von etwa 50 Gew.-% Propylenoxid bei etwa 0,2, in anderen Fällen entsprechend darüber oder darunter.

Eine Entsalzung oder Abtrennung störender Inhomogenitäten kann auch beispielsweise mittels Ultrafiltration erfolgen. Sollte das Produkt zu konzentriert sein, kann eine Verdünnung mit entionisiertem Wasser vorgenommen werden.

Nach Zusatz der möglicherweise gewünschten Additive (z.B. Konservierungsstoffe, Füllstoffe, Antistatika, Mittel zur Verbesserung der Elastizität, Vernetzungsmittel) kann bei Bedarf mittels Filter oder Zentrifuge eine mechanische Separation durchgeführt und dabei gleichzeitig eine Entgasung der zu verarbeitenden Lösung erreicht werden.

Eine für die Zwecke der Erfindung besonders geeignete Beschichtungslösung besitzt die folgenden rheologischen Eigenschaften:
Eine dynamische Viskosität von 0,1 Pas bis 40 Pas bei einer Temperatur von 25°C und einer Schergeschwindigkeit von 30,7 s⁻¹. Viskoelastische Eigenschaften der Polymerlösung, wobei das Verhältnis zwischen viskosem und elastischem Anteil Tan κ Werte zwischen 1 und 10 (max. 50) bei einer Temperatur von 25°C und einer Schergeschwindigkeit von 30,7 s⁻¹ annimmt.
Mit dem beispielhaft genannten Verfahren lassen sich solche Werte ohne weiteres erhalten.

Das Verfahren bietet ferner den Vorteil, daß die Stärke besonders schonend und insbesondere durchgängig bei relativ niedrigen Temperaturen (<60°C) oder vollständig bei Raumtemperatur umgesetzt und verarbeitet wird, was positive Effekte für die Beschichtung des Trägermaterials bewirkt. Durch die Kaltwasserlöslichkeit nach der Neutralisation, Separation, Salzabtrennung und dem Aufkonzentrieren kann die Stärke derart schonend verarbeitet werden, daß keine oder nur unbedeutende Abbaureaktionen einsetzen.

Die wässrige Gießlösung kann vorzugsweise bei Raumtemperatur oder leicht erhöhten Temperaturen mit einem geeigneten Auftragssystem (z.B. Rakel) auf die zu beschichtende Materialbahn (Papier) aufgebracht werden.

Besonders günstig hat sich die Verwendung von nach dem Autoklav-Verfahren hergestellten Hydroxypropyletherstärken, insbesondere aus Weizenstärke, Maisstärke oder HA Erbsenstärke erwiesen, die als Lösungen mit TS-Gehalten von 12 bis 20 % Gew.-% und vorzugsweise mit Derivatisierungs-(DS-)Graden von 0,1 bis 1,0, stärker bevorzugt bis 0,4, eingesetzt werden. Diese zeigen im Vergleich mit Handelsmustern (mit Fluorcarbonsäuren beschichtet) deutlich bessere Fettdichtigkeiten, insbesondere auch in Knickstellenbereichen, die bei Faltschachtelanwendungen besonders kritisch sind. Im Vergleich zu den zuvor genannten erfindungsgemäßen Beschichtungen mit handelsüblichen Stärkederivaten können die für die Beschichtung mit diesen Stärken eingesetzten Flächengewichte reduziert werden.

Beispiel: 713 g Weizenstärke werden in 1,3 l destilliertem Wasser 4 Stunden lang gerührt und dann abgenutscht. Die feuchte Stärke wird mit 1,824 l Wasser aufgerührt und mit 1.811 g 10%iger Natronlauge, gewonnen durch Mischen von 376 g 50%iger NaOH mit 1.505 g Wasser versetzt. Die Derivatisierung erfolgt mit 323 g Proylenoxid bei 23°C, das innerhalb von 20 min unter Rühren zugesetzt wird. Man läßt die Mischung noch weitere 4 h rühren und 20 h ruhen. Neutralisiert wird mit 40%iger Phosphorsäure (ca. 700g). Danach wird die Lösung in Dialyseschläuche gefüllt und ca. 4 Tage bei täglichem Wasserwechsel dialysiert. Das Produkt wird mit Hilfe eines Vacuum-Rotationsverdampfers auf über 20% Trockenmasse aufkonzentriert.

Der erhaltene Stärkeether besitzt einen Derivatisierungsgrad von etwa 0,2. Die Leitfähigkeit der Beschichtungsmasse liegt bei etwa 1100 µS/cm.

Analog zu diesem Beispiel wurden die nachstehenden Beschichtungsmassen hergestellt und mit einer 20 µm Rakel auf einseitig gestrichenen Chromo Duplexkarton (GD2), 310 g/m², Dicke ca. 420 µm aufgetragen. Nach der Trocknung des ersten Auftrags (fingertrocken, ca. 2 h Dauer) wurde eine zweite Schicht aufgetragen und bei Raumtemperatur und etwa 50% Raumfeuchte über etwa 1 Woche, ggf. auch länger, getrocknet.

An drei Kartonbögen der beschichteten Muster erfolgte die Bestimmung der Auftragsmasse durch Wägung (nach DIN 53 104: Prüfung von Papier und Pappe, Bestimmung des Flächengewichts, Sept. 1971) und der Dicke mit einem Dickenmeßgerät (Taster: plan/ballig, 30 SKT, MB = 1µm). Außerdem wurde die KIT-Zahl für unpolare Substanzen nach dem 3M KIT-Test bestimmt. Dabei dienen Lösemittelgemische aus Rizinusöl, Toluol und Heptan als Testflüssigkeiten. Die KIT-Lösung mit der höchsten Nummer, die 15 sec. auf der Probe steht, ohne einen Durchschlag oder eine Verfärbung zu bewirken, ist die kennzeichnende KIT-Zahl.

| **Rohstoff** | **Derivatisierung mit PPO (in Gew.-% bezogen a.d. Rohstoff)** | **Leitfähigkeit (ggf. nach Entsalzen)** | **Flächen auftragsgewicht [g/m**^{**2**}**]** | **Schichtdicke [µm]** | **KIT-Zahl** |
|---|---|---|---|---|---|
| Weizenstärke | 50 | 1100 | 21,5 | 33,24 | >21 |
| (Kröner) | 50 | 8180 | 32,6 | 29,6 | 8 |
| | 75 | 1600 | 11,2 | 25 | 9 |
| | 25 | 5150 | 31 | 34,8 | 13 |
| | 25 | 10700 | 21,1 | 27,1 | 9 |
| Maisstärke | 50 | 1800 | 21,5 | 34,3 | 15 |
| (Cerestar) | 50 | 6600 | 16,3 | 20,4 | 14 |
| | 25 | 4400 | 15 | 25,9 | 14 |
| | 75 | 1340 | 4,9 | 18,6 | >21 |
| Maisstärke + 5 Gew-% Glycerin | 50 | 1800 | 15,6 | 23,1 | 19 |
| Maisstärke + 2 Gew.-% Vernetzer | 50 | 1800 | 16,6 | 34,7 | 15 |
| Kartoffelstärke | 50 | 870 | 21 | 18,7 | 9 |
| Amylex 20/20 | 50 | 3700 | 18,1 | 18,4 | 6 |
| (Südstärke) | | | | | |
| Tapiokastärke | 50 | 840 | 8,6 | 221 | 8 |
| (Cerestar) | 50 | 12200 | 11,3 | 23 | 8 |
| HA Erbsenstärke, 18 Masse-% TS | -50 | | | | >16 |

## Patentansprüche

1. Mehrschichtige Verpackung für fettende Güter oder Teil einer solchen Verpackung, umfassend
- eine Trägerschicht aus einem polymeren Material als Hauptkomponente und
- mindestens eine auf die Trägerschicht aufgebrachte, nicht die Außenseite der Verpackung bildende Schicht, die ein Stärkederivat als Hauptkomponente enthält, **dadurch gekennzeichnet, daß** das Stärkederivat ein mit einem C₂-C₆-Alkylenoxid modifiziertes Stärkederivat mit einem Derivatisierungsgrad von 0,1 bis 1 ist.

2. Mehrschichtige Verpackung nach Anspruch 1, **dadurch gekennzeichnet, daß** das Stärkederivat ein mit einem C₂-C₄-Alkylenoxid modifiziertes Stärkederivat ist.

3. Mehrschichtige Verpackung oder Teil einer solchen Verpackung nach Anspruch 1, **dadurch gekennzeichnet, daß** das C₂-C₆-Alkylenoxid Propylenoxid ist.

4. Mehrschichtige Verpackung oder Teil einer solchen Verpackung nach einem der voranstehenden Ansprüche, **dadurch gekennzeichnet, daß** das Stärkederivat durch Modifizierung ggf. teilabgebauter Mais-, Weizen-, Kartoffel-, HA Erbsenoder Tapiokastärke erhalten wurde.

5. Mehrschichtige Verpackung oder Teil einer solchen Verpackung nach einem der voranstehenden Ansprüche, **dadurch gekennzeichnet, daß** der Derivatisierungsgrad des Stärkederivats 0,2 bis 0,3 beträgt.

6. Mehrschichtige Verpackung oder Teil einer solchen Verpackung nach einem der voranstehenden Ansprüche, **dadurch gekennzeichnet, daß** das polymere Material der Trägerschicht ein natürlich vorkommendes Polymer, vorzugsweise Cellulose, ist.

7. Mehrschichtige Verpackung oder Teil einer solchen Verpackung nach einem der voranstehenden Ansprüche, **dadurch gekennzeichnet, daß** die ein Stärkederivat als Hauptkomponente enthaltende Schicht zusätzliche Bestandteile, ausgewählt unter Pigmenten, Weichmachern, die Langzeitstabilität erhöhenden Mitteln, die Wasserstabilität erhöhenden Mitteln und die Elastizität beeinflussenden Mitteln, enthält.

8. Mehrschichtige Verpackung oder Teil einer solchen Verpackung, vorzugsweise nach Anspruch 4, **dadurch gekennzeichnet, daß** zusätzliche Bestandteile ausgewählt sind unter Glycerin, Harnstoff, Borax oder Glyoxal.

9. Verwendung einer mit einem C₂-C₆-Alkylenoxid derivatisierten Stärke als Hauptkomponente einer Schicht einer mehrschichtigen Verpackung, die auf einer Trägerschicht dieser Verpackung aus einem polymeren Material aufgebracht ist, zur Erzeugung von Fettdichtigkeit der mehrschichtigen Verpackung.

10. Verwendung nach Anspruch 9, **dadurch gekennzeichnet, daß** das C₂-C₆-Alkylenoxid Propylenoxid ist.

11. Verwendung nach einem der Ansprüche 9 oder 10, **dadurch gekennzeichnet, daß** das Stärkederivat durch Modifizierung ggf. teilabgebauter Mais-, Weizen-, Kartoffel-, HA Erbsenstärke oder Tapiokastärke erhalten wurde und ggf. einen Derivatisierungsgrad von 0,1 bis 1, stärker bevorzugt von 0,1 bis 0,4 aufweist.

12. Verwendung nach einem der Ansprüche 9 bis 11, **dadurch gekennzeichnet, daß** die genannte Schicht zusätzliche Bestandteile, ausgewählt unter Pigmenten, Weichmachern, die Langzeitstabilität erhöhenden Mitteln, die Wasserstabilität erhöhenden Mitteln, den KIT-Wert erhöhenden Mitteln und die Elastizität beeinflussenden Mitteln, bevorzugt ausgewählt unter Glycerin, Harnstoff, Borax oder Glyoxal, enthält.

## Claims

1. Multilayered packaging for greasy products or part of such a packaging, comprising
- a carrier layer made of a polymer material as main component and
- at least one layer which is applied upon the carrier layer, does not form the exterior side of the packaging and contains a starch derivative as main component, **characterised in that** the starch derivative is a starch derivative modified with a C₂-C₆ alkylene oxide and having a derivatisation degree of 0.1 to 1.

2. Multilayered packaging according to claim 1, **characterised in that** the starch derivative is a starch derivative modified with a C₂-C₄ alkylene oxide.

3. Multilayered packaging or part of such a packaging according to claim 1, **characterised in that** the C₂-C₆ alkylene oxide is propylene oxide.

4. Multilayered packaging or part of such a packaging according to one of the preceding claims, **characterised in that** the starch derivative was obtained by modification of if necessary partially degraded starch from maize, wheat, potatoes, HA peas or tapioca.

5. Multilayered packaging or part of such a packaging according to one of the preceding claims, **characterised in that** the derivatisation degree of the starch derivative is 0.2 to 0.3.

6. Multilayered packaging or part of such a packaging according to one of the preceding claims, **characterised in that** the polymer material of the carrier layer is a naturally occurring polymer, preferably cellulose.

7. Multilayered packaging or part of such a packaging according to one of the preceding claims, **characterised in that** the layer which contains a starch derivative as main component contains additional components, selected from pigments, plasticisers, media increasing the long-term stability, media increasing the water stability and media influencing the elasticity.

8. Multilayered packaging or part of such a packaging preferably according to claim 4, **characterised in that** additional components are selected from glycerine, urea, borax or glyoxal.

9. Use of a starch derivatised with a C₂-C₆ alkylene oxide as main component of a layer of a multilayered packaging, which layer is applied upon a carrier layer, made of polymer material, of this packaging, for producing grease impermeability of the multilayered packaging.

10. Use according to claim 9, **characterised in that** the C₂-C₆ alkylene oxide is propylene oxide.

11. Use according to one of the claims 9 or 10, **characterised in that** the starch derivative was obtained by modification of if necessary partially degraded starch from maize, wheat, potatoes, HA peas or tapioca and if necessary has a derivatisation degree of 0.1 to 1, more preferably of 0.1 to 0.4.

12. Use according to one of the claims 9 to 11, **characterised in that** the mentioned layer contains additional components, selected from pigments, plasticisers, media increasing the long-term stability, media increasing the water stability, media increasing the KIT value and media influencing the elasticity, preferably selected from glycerine, urea, borax or glyoxal.

## Revendications

1. Emballage multicouches pour des denrées grasses ou partie d'un tel emballage comprenant :
- une couche de support en matériau polymère comme composant principal, et
- au moins une couche déposée sur la couche de support, ne formant pas la face extérieure de l'emballage et qui contient un dérivé d'amidon comme composant principal,
**caractérisé en ce que**
le dérivé d'amidon est un dérivé d'amidon modifié par un oxyde d'alkylène C₂-C₆ d'un degré de dérivation de 0,1 à 1.

2. Emballage multicouches selon la revendication 1,
**caractérisé en ce que**
le dérivé d'amidon est un dérivé d'amidon modifié par un oxyde d'alkylène C₂-C₄.

3. Emballage multicouches ou partie d'un tel emballage selon la revendication 1,
**caractérisé en ce que**
l'oxyde d'alkylène C₂-C₆ est de l'oxyde de propylène.

4. Emballage multicouches ou partie d'un tel emballage selon l'une quelconque des revendications précédentes,
**caractérisé en ce que**
le dérivé d'amidon a été obtenu par modification d'amidon de mais, de blé, de pomme de terre, de petits pois ou de tapioca, le cas échéant partiellement dégradé.

5. Emballage multicouches ou partie d'un tel emballage selon l'une quelconque des revendications précédentes,
**caractérisé en ce que**
le degré de dérivation du dérivé d'amidon est compris entre 0,2 et 0,3.

6. Emballage multicouches ou partie d'un tel emballage selon l'une quelconque des revendications précédentes,
**caractérisé en ce que**
le matériau polymère de la couche de support est un polymère naturel, de préférence de la cellulose.

7. Emballage multicouches ou partie d'un tel emballage selon l'une quelconque des revendications précédentes,
**caractérisé en ce que**
la couche contenant un dérivé d'amidon comme composant principal contient des composants supplémentaires choisis parmi les pigments, les agents plastifiants, les agents augmentant la durée de vie, les agents augmentant la résistance à l'eau et les agents ayant une influence sur l'élasticité.

8. Emballage multicouches ou partie d'un tel emballage, de préférence selon la revendication 4,
**caractérisé en ce que**
l'on choisit des composants supplémentaires parmi la glycérine, l'urée, le borax ou le glyoxal.

9. Utilisation d'un amidon dérivé d'un oxyde d'alkyle C₂-C₆ comme composant principal d'une couche d'un emballage multicouches, qui est déposée sur une couche de support de cet emballage en matériau polymère pour obtenir une étanchéité à la graisse de l'emballage multicouches.

10. Utilisation selon la revendication 9,
**caractérisée en ce que**
l'oxyde d'alkyle C₂-C₆ est de l'oxyde de propylène.

11. Utilisation selon l'une quelconque des revendications 9 ou 10,
**caractérisée en ce que**
le dérivé d'amidon a été obtenu par modification d'amidon de maïs, de blé, de pomme de terre, de petits pois ou de tapioca, le cas échéant partiellement dégradé, et présente le cas échéant un degré de dérivation de 0,1 à 1, de préférence de 0,1 à 0,4.

12. Utilisation selon l'une quelconque des revendications 9 à 11,
**caractérisée en ce que**
ladite couche contient des composants supplémentaires choisis parmi les pigments, les agents plastifiants, les agents augmentant la durée de vie, les agents augmentant la résistance à l'eau, les agents augmentant la valeur KIT et les agents ayant une influence sur l'élasticité, choisis de préférence parmi la glycérine, l'urée, le borax ou le glyoxal.
